# EUROPEAN PATENT APPLICATION

(11) **EP 4 525 113 A2**
(43) Date of publication of application: **19.03.2025**
(21) Application number: 24199700.6
(22) Date of filing: 11.09.2024
(51) Int. Cl.: H01M 10/04, H01M 10/0585, H01M 10/0587, H01M 50/105, H01M 50/46

(54) **RECHARGEABLE BATTERY**

(30) Priority: 14.09.2023 KR 20230122654
(71) Applicant: SAMSUNG SDI CO., LTD., Yongin-si, Gyeonggi-do 17084 (KR)
(72) Inventor: JEOUNG, Seokyo, 17084 Yongin-si (KR); LEE, Wonjin, 17084 Yongin-si (KR); SON, Hee-Myeong, 17084 Yongin-si (KR); KIM, Donghyun, 17084 Yongin-si (KR)
(74) Representative: Marks & Clerk LLP

(57) **Abstract**

A rechargeable battery includes: an electrode assembly having a repeating structure in which a first electrode plate and a second electrode plate are placed on both surfaces of a separator; and a case that accommodates the electrode assembly, wherein the electrode assembly includes a bonding part formed by adhesively bonding the separator that protrudes to an outside of the first electrode plate and the second electrode plate on at least one surface facing the case.

## Description

### BACKGROUND

### 1. Field

Aspects of some embodiments of the present disclosure relate to a rechargeable battery.

### 2. Description of the Related Art

A rechargeable battery is a battery that is capable of being repeatedly charged and discharged, unlike a primary battery. Low-capacity rechargeable batteries may be used, for example, in small portable electronic devices such as mobile phones, laptop computers, and camcorders. Rechargeable batteries with large capacity and high density may be used, for example, as power for driving motors of hybrid vehicles and electric vehicles or for energy storage.

The rechargeable battery includes an electrode assembly that charges and discharges a current, a case or pouch that accommodates the electrode assembly and an electrolyte solution, and an electrode terminal that is connected to the electrode assembly and drawn to the outside of the case or pouch. The electrode assembly may be formed into a jelly roll type or configuration formed by winding an electrode plate and a separator, or a stack type or stacked configuration formed by laminating the electrode plate and the separator.

The jelly roll type electrode assembly may use a taping method to secure the separator and the electrode plate with a tape at a tab withdrawal part, but does not have a configuration to separately secure the separator and the electrode plate on the opposite side of the tab withdrawal. A tape may be applied to relatively improve insertion of the electrode assembly.

However, the tape applied to the electrode assembly does not prevent or reduce the end of the electrode assembly being overturned, causing the end of the electrode plate to pull back out of the separator, and may not mitigate damage caused by external impacts applied during a drop evaluation. Therefore, the electrode assembly may be exposed to the pullback and the impact for the drop evaluation.

The above information disclosed in this Background section is only for enhancement of understanding of the background and therefore the information discussed in this Background section does not necessarily constitute prior art.

### SUMMARY

Aspects of some embodiments of the present disclosure relate to a rechargeable battery. For example, aspects of some embodiments of the present disclosure relate to a rechargeable battery that prevents or reduces pullback and mitigates an impact of an electrode assembly when evaluating a drop of a battery cell.

Aspects of some embodiments include a rechargeable battery that prevents or reduces the pullback of the electrode assembly and mitigates or reduces damage cause by an impact when evaluating a drop of a battery cell.

A rechargeable battery according to some embodiments includes an electrode assembly repeatedly having a structure in which a first electrode plate and a second electrode plate are placed on both surfaces of a separator; and a case that accommodates the electrode assembly, wherein the electrode assembly includes a bonding part formed by adhesively bonding the separator that protrudes to the outside of the first electrode plate and the second electrode plate on at least one surface facing the case.

According to some embodiments, the case may be formed as a pouch or a square can, and the electrode assembly may be formed of a plate shape corresponding to the inner shape of the case.

According to some embodiments, the electrode assembly may be formed of a stack type. According to some embodiments, the electrode assembly may be formed into a jelly roll type.

According to some embodiments, the bonding part may be formed on a first side toward the bottom of the case on the opposite side where the electrode tab is drawn out among the four directions of the exterior sides of the electrode assembly.

According to some embodiments, the bonding part may be formed on a second side and a third side toward the side of the case on both sides in the direction that intersects the direction in which the electrode tab is drawn out among the exterior sides of the four directions of the electrode assembly.

According to some embodiments, the bonding part may be formed by applying an adhesive to the entire area of the one surface.

According to some embodiments, the bonding part may be formed by applying an adhesive to the entire area of the one surface with a plurality of dots.

According to some embodiments, the bonding part may be formed by repeatedly performing processes of being formed in the length direction at the one surface formed in the thickness direction and at one end of the length direction, formed again in the length direction at the end of the thickness direction, and again formed in the thickness direction at one end of the length direction.

According to some embodiments, the bonding part may be formed by repeatedly performing processes of being formed in the length direction on the one surface, formed from one end of the length direction to the inside of the thickness direction, formed again at the end of the thickness direction in the opposite direction to the length direction, and again formed from one end of the length direction to the inside of the thickness direction.

According to some embodiments, the bonding part may be formed on both sides of the one surface with the central part separated in the length direction.

According to some embodiments, the bonding part may be formed by repeatedly performing processes of being formed on both sides of the one surface in the length direction by skipping the central part, spaced apart in the thickness direction, and formed on both sides in the opposite length direction by skipping the central part.

According to some embodiments, the adhesive may be a UV adhesive. According to some embodiments, the adhesive may be formed of a polyethylene-based UV adhesive.

According to some embodiments, the bonding part may be formed at the aligned ends of the separator.

At least some of the above and other features of the invention are set out in the claims.

In the electrode assembly according to some embodiments, because the bonding part is formed by bonding the separators protruding to the outside of the first electrode plate and the second electrode plate with the adhesive, during a drop evaluation, a pullback of the electrode assembly where the first and second electrode plates come out of the separator may be prevented or reduced, and damage from an impact applied during the drop evaluation may be mitigated or relatively reduced.

### BRIEF DESCRIPTION OF THE DRAWINGS

FIG. 1 is an exploded perspective view of a rechargeable battery according to some embodiments of the present disclosure.
FIG. 2 is an exploded perspective view of an electrode assembly in FIG. 1 according to some embodiments of the present disclosure.
FIG. 3 is a plan view of an electrode assembly of FIG. 1 and FIG. 2 according to some embodiments of the present disclosure.
FIG. 4 is a bottom view of FIG. 3 according to some embodiments of the present disclosure.
FIG. 5 is a side view of FIG. 3 according to some embodiments of the present disclosure.
FIG. 6 is a bottom image of an electrode assembly according to some embodiments of the present disclosure.
FIG. 7 is a partial plan view of FIG. 6 according to some embodiments of the present disclosure.
FIG. 8 is a bottom image of an electrode assembly according to some embodiments of the present disclosure.
FIG. 9 is a partial plan view of FIG. 8 according to some embodiments of the present disclosure.
FIG. 10 is a bottom image of an electrode assembly according to some embodiments of the present disclosure.
FIG. 11 is a partial plan view of FIG. 10 according to some embodiments of the present disclosure.
FIG. 12 is a bottom view of an electrode assembly according to some embodiments of the present disclosure.
FIG. 13 is a bottom view of an electrode assembly according to some embodiments of the present disclosure.
FIG. 14 is a bottom view of an electrode assembly according to some embodiments of the present disclosure.
FIG. 15 is an exploded perspective view of a rechargeable battery according to some embodiments of the present disclosure.
FIG. 16 is a plan view of an electrode assembly in FIG 15 according to some embodiments of the present disclosure.

### DETAILED DESCRIPTION

Hereinafter, aspects of some embodiments of the present disclosure will be described more fully with reference to the accompanying drawings, in which embodiments of the disclosure are shown. As those skilled in the art would realize, the described embodiments may be modified in various different ways, all without departing from the scope of embodiments according to the present disclosure. The drawings and description are to be regarded as illustrative in nature and not restrictive, and like reference numerals designate like elements throughout the specification.

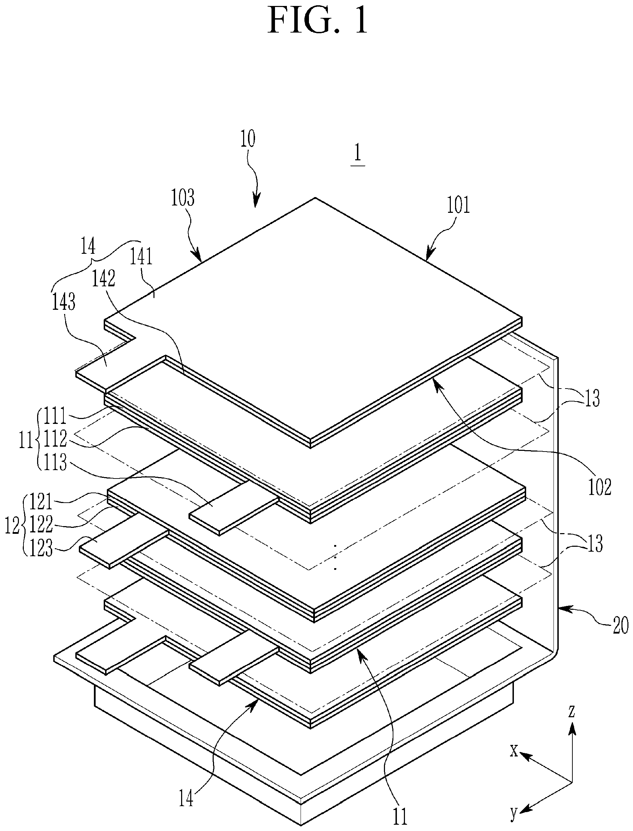

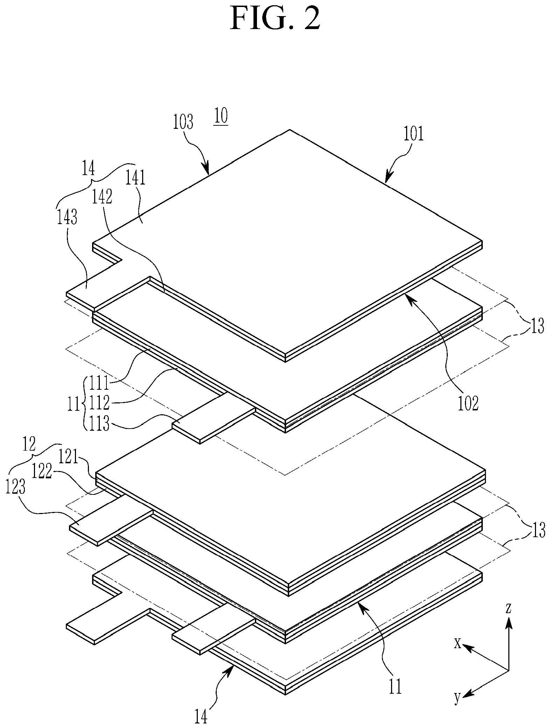

FIG. 1 is an exploded perspective view of a rechargeable battery according to some embodiments of the present disclosure, and FIG. 2 is an exploded perspective view of an electrode assembly in FIG. 1. Referring to FIG. 1 and FIG. 2, a rechargeable battery 1 according to some embodiments may be formed by embedding an electrode assembly 10 in a case 20 along with an electrolyte.

The electrode assembly 10 includes a separator 13, and a first electrode plate 11 and a second electrode plate 12 formed as a single sheet on both surfaces of the separator 13. That is, the electrode assembly 10 repeatedly comprises a structure in which the first electrode plate 11 and the second electrode plate 12 are arranged on both surfaces of the separator 13.

As an example, the first electrode plate 11 is a positive electrode plate and has a positive active material layer 112 on both surfaces of an electrode current collecting plate 111. The electrode current collecting plate 111 has an electrode tab 113 of an uncoated region protruding from one side. The electrode tab 113 is drawn to the outside of the case when assembling the rechargeable battery by being directly formed or being connected or to the lead tab.

The second electrode plate 12 is a negative electrode plate and is provided with a negative active material layer 122 on both surfaces of an electrode current collecting plate 121. The electrode current collecting plate 121 has an electrode tab 123 of an uncoated region protruding on one side. The electrode tab 123 is drawn to the outside of the case when assembling the rechargeable battery by being directly formed or being connected or to the lead tab. The case may be formed as a pouch or a can.

The electrode tab 113 of the first electrode plate 11 and the electrode tab 123 of the second electrode plate 12 are drawn out in the same direction (a y-axis direction) and spaced apart from each other in a direction (an x-axis direction) that intersects the draw-out direction.

Meanwhile, the electrode assembly 10 is provided with a cross-sectional second electrode plate 14 on the upper and lower outermost surfaces. The cross-sectional second electrode plate 14 is placed on one side of the first electrode plate 11 on both sides of the stacking direction with the separator 13 interposed therebetween.

The cross-sectional second electrode plate 14 is provided with a negative active material layer 142 on the cross-section of an electrode current collecting plate 141. The electrode current collecting plate 141 has an electrode tab 143, which is an uncoated region protruding on both sides spaced apart from each other. The electrode tab 143 is stacked with the electrode tab 123 of the second electrode plate 12 and then is drawn to the outside of the case when assembling the rechargeable battery by being directly formed or being connected to the lead tab.

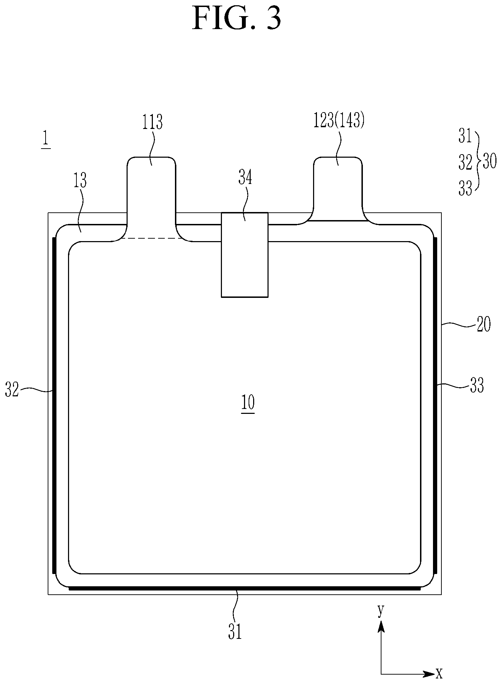

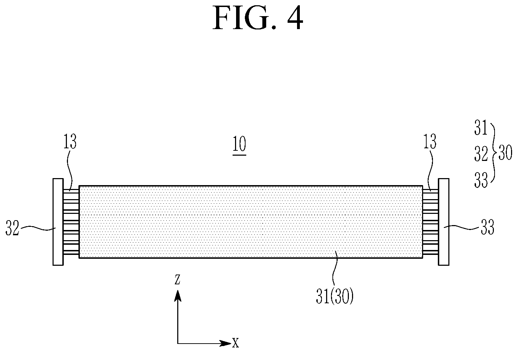

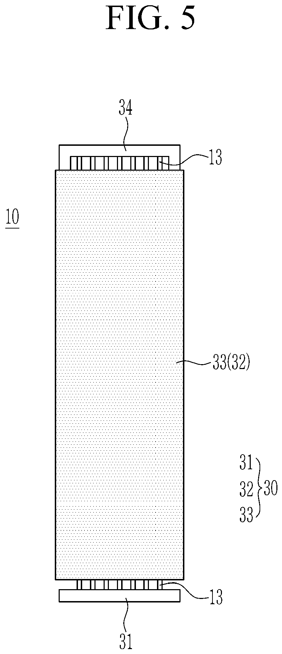

FIG. 3 is a plan view of an electrode assembly of FIG. 1 and FIG. 2. FIG. 4 is a bottom view of FIG. 3. FIG. 5 is a side view of FIG. 3. Referring to FIG. 3 to FIG. 5, the electrode assembly 10 includes a bonding part 30.

The bonding part 30 is formed by bonding the separator 13 protruding to the outside of the first electrode plate 11 and the second electrode plate 12 with an adhesive on at least one surface facing the case 20. The electrode assembly 10 is formed in a plate shape corresponding to the internal shape of the case 20. In the first embodiment, the electrode assembly 10 is formed as a stack type.

The bonding part 30 is formed on a first side 101 facing the bottom of the case 20 on the opposite side where the electrode tabs 113 and 123 are drawn out among the exterior sides of four directions (up-and-down (the y-axis) and left-and-right (the x-axis) directions) of the electrode assembly 10.

In other words, the bonding part 30 includes a first bonding impregnation layer 31 formed on the first side 101 of the electrode assembly 10 - that is, the lower surface in FIG. 3. The first bonding impregnation layer 31 is impregnated with the separator 13 on the first side 101 of the electrode assembly 10 and adheres and secures the multi-layer separators 13 to each other, so that the first and second electrode plates 11 and 12 are fixed between the attached separators 13, thereby preventing them from protruding from the separators 13.

In addition, the first bonding impregnation layer 31 may absorb the impact when a rechargeable battery 1 is dropped, and then may absorb and prevent the external impact from being transmitted to the bottom of the electrode assembly 10 through the case 20. The first bonding impregnation layer 31 may prevent pullback of the electrode assembly 10, where the first and second electrode plates 11 and 12 come out of the separator 13.

In addition, the bonding part 30 is formed on a second side 102 and a third side 103 facing the side of the case 20 to both sides of the direction (the x-axis direction) that intersects the direction (the y-axis direction) in which the electrode tabs 113 and 123 are drawn out among the exterior sides of the four directions (the up, down, left, and right directions) of the electrode assembly 10.

That is, the bonding part 30 includes a second bonding impregnation layer 32 and a third bonding impregnation layer 33 formed on the second side 102 and the third side 103 of the electrode assembly 10 - that is, the left-hand side and the right-hand side in FIG. 3. The second and third bonding impregnation layers 32 and 33 are impregnated with the separator 13 on the second and third sides 102 and 103 of the electrode assembly 10 to attach and fix the multiple layers of the separator 13 to each other so that the first and second electrode plates 11 and 12 are fixed between the attached separators 13, thereby preventing them from protruding the separators 13.

In addition, the second and third bonding impregnation layers 32 and 33 absorb the impact when the rechargeable battery 1 is dropped, thereby absorbing and preventing the external impact transmitted to the left-hand side and right-hand side of the electrode assembly 10 through the case 20. The second and third bonding impregnation layers 32 and 33 may prevent pullback on the electrode assembly 10, through which the first and second electrode plates 11 and 12 come out of the separator 13.

On the other hand, the electrode assembly 10 is taped with an insulating tape 34 on the opposite side of the first bonding impregnation layer 31 - that is, on the side where the electrode tabs 113 and 123 are drawn out. Since the drop impact of the electrode assembly 10 does not flow into the insulating tape 34 side, a bonding part to mitigate the impact may not be provided.

Since the insulating tape 34 holds the separator 13 and the first and second electrode plates 11 and 12 on the electrode tabs 113 and 123 side, bonding of the separator 13 by the bonding part 30 is made more stable.

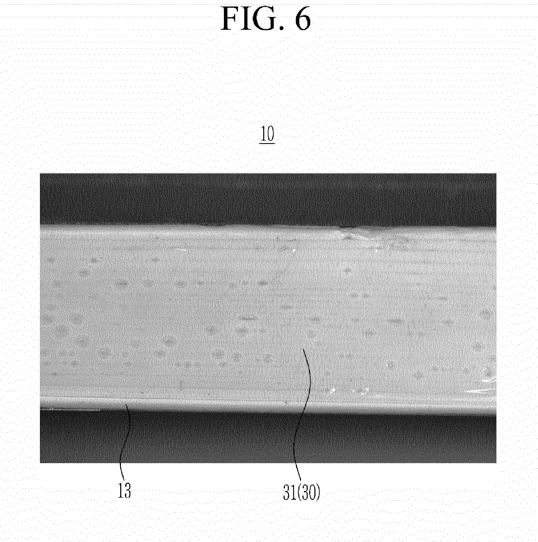

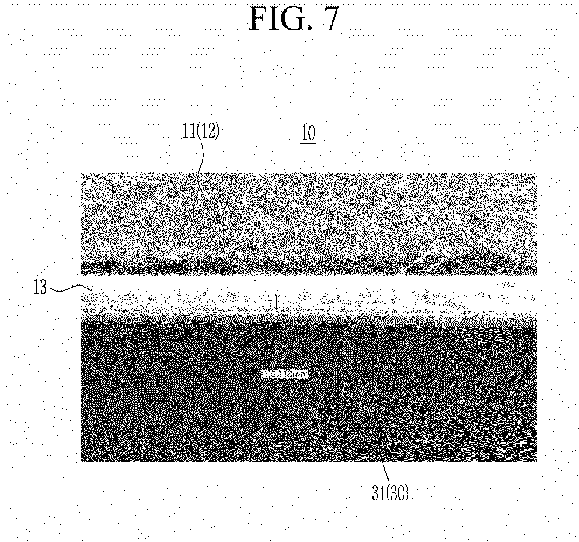

FIG. 6 is a bottom image of an electrode assembly according to some embodiments of the present disclosure. FIG. 7 is a partial plan view of FIG. 6. Referring to FIG. 6 and FIG. 7, the first bonding impregnation layer 31 of the bonding part 30 is described as an example.

The first bonding impregnation layer 31 is formed by applying an adhesive with a thickness t1 of 118 µm to the entire surface of the first side 101, which is the bottom surface of the electrode assembly 10. The first bonding impregnation layer 31, which has the thickness t1 on the entire surface, has adherence and impact-absorption properties.

As an example, the adhesive may be formed as a UV adhesive. The UV adhesive impregnates the adhesive and then is irradiated with UV light, thereby forming the bonding part 30 with adherence and impact-absorption properties. Therefore, the UV adhesive facilitates the formation of the bonding part 30. As an example, the adhesive may be formed as a polyethylene-based UV adhesive. The bonding part 30 is formed and impregnated at the aligned ends of the separator 13.

For this, the stack-type electrode assembly 10 is heat-pressurized for a period of time (e.g., a set or predetermined period of time) to compress the electrode assembly 10. After aligning the separator 13 in the pressed electrode assembly 10, the adhesive is impregnated and bonded to form a uniformly (or relatively uniformly) coated surface.

For convenience, the case 20 accommodating the electrode assembly 10 including the bonding part 30 is formed as a pouch. However, the case 20 is not limited to a pouch and may be formed as a square can.

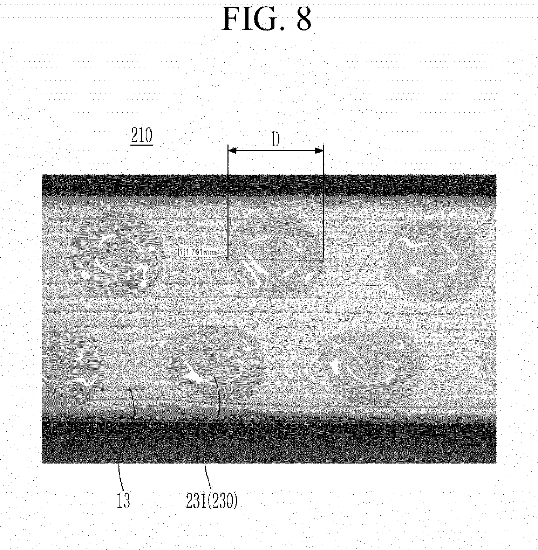

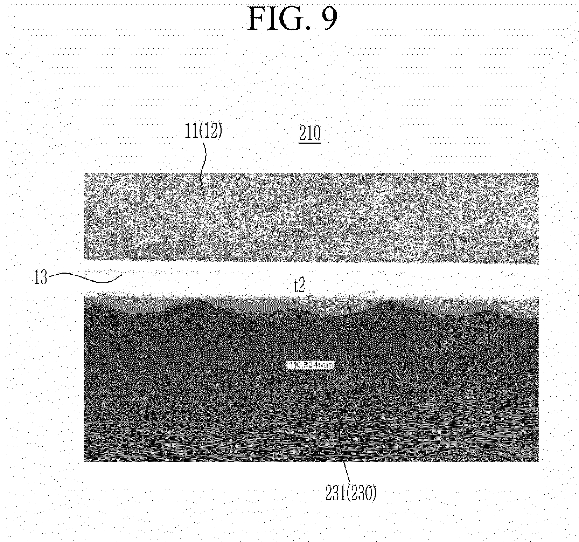

FIG. 8 is a bottom image of an electrode assembly according to some embodiments of the present disclosure. FIG. 9 is a partial plan view of FIG. 8. Referring to FIG. 8 and FIG. 9, embodiments shown in FIGS. 8 and 9 illustrate a first bonding impregnation layer 231 among a bonding part 230 of an electrode assembly 210.

The first bonding impregnation layer 231 is formed by applying the adhesive to the first side 101, which is the lower surface in the electrode assembly 210, in a plurality of dot lines (for example, 2 lines). As an example, the dot of the first bonding impregnation layer 231 is formed with a diameter D of 1.7 mm and a thickness t2 of 324 µm. The first bonding impregnation layer 231, which has the dot diameter and the thickness, has adherence and impact-absorption properties. The larger the dot diameter and thickness, the more excellent adherence and impact absorption may be achieved.

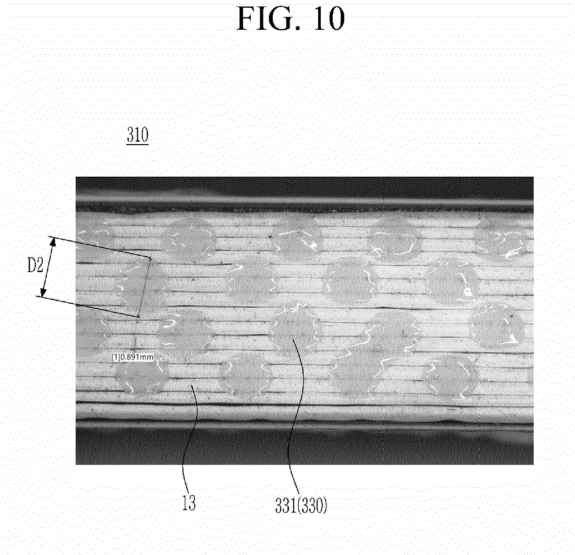

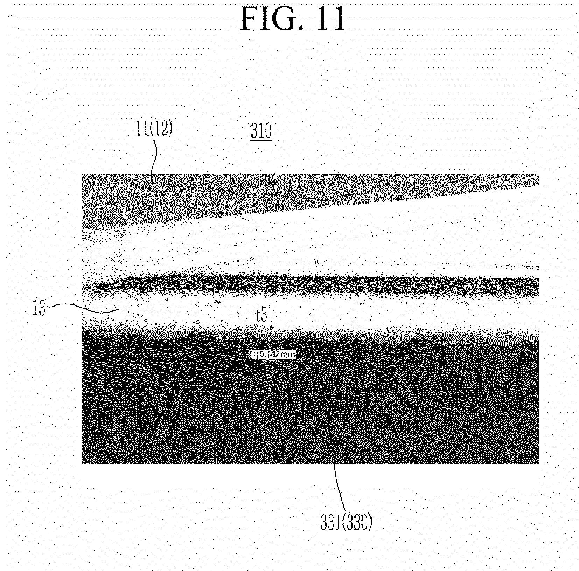

FIG. 10 is an image of a bottom surface of an electrode assembly according to some embodiments of the present disclosure. FIG. 11 is a partial top plan view of FIG. 10. Referring to FIG. 10 and FIG. 11, the embodiments shown in FIGS. 10 and 11 illustrate a first bonding impregnation layer 331 of the bonding part 330 of the electrode assembly 310.

The first bonding impregnation layer 331 is formed by applying the adhesive to the first side 101, which is the lower surface in the electrode assembly 310, in a plurality of dot lines (for example, 4 lines). The dot of the first bonding impregnation layer 331 is formed with a diameter D2 of 0.89 mm and a thickness t3 of 142 µm. The first bonding impregnation layer 331, which has a dot diameter and thickness, has adherence and impact-absorption properties.

Compared to the embodiments illustrated and described with respect to FIG. 8, the embodiments illustrated with respect to FIG. 10 and 11 have relatively more dot lines, so the dot diameter and the thickness are relatively smaller. Compared to the embodiments illustrated and described with respect to FIG. 8, the embodiments illustrated with respect to FIGS. 10 and 11 have a relatively wider adhesive area and a relatively smaller adhesive thickness, thereby giving similar adherence and impact-absorption properties to the embodiments illustrated and described with respect to FIG. 8.

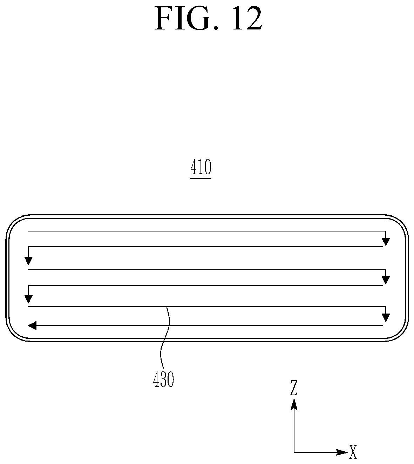

FIG. 12 is a bottom view of an electrode assembly according to some embodiments of the present disclosure. Referring to FIG. 12, in the fourth embodiment, a bonding part 430 of an electrode assembly 410 may be formed by repeatedly performing the process of being formed in the length direction (the x-axis direction) at one surface, formed in the thickness direction (the z-axis direction) at one end of the length direction, again formed in the length direction (the x-axis direction) at the end of the thickness direction, and again formed at one end of the length direction to the thickness direction (the z-axis direction).

The method for forming the bonding part 430 of the embodiments illustrated with respect to FIG. 12 may be applied to forming the bonding parts (30, 230, and 330) of the embodiments illustrated with respect to FIGS. 1-11. The embodiments illustrated with respect to FIG. 12 may relatively improve the workability of forming the bonding part 430 because there is no disconnection of the trajectory forming the bonding part 430. The quality of the length direction (the x-axis direction) may be uniform compared to the thickness direction (the z-axis direction) of the bonding part 430.

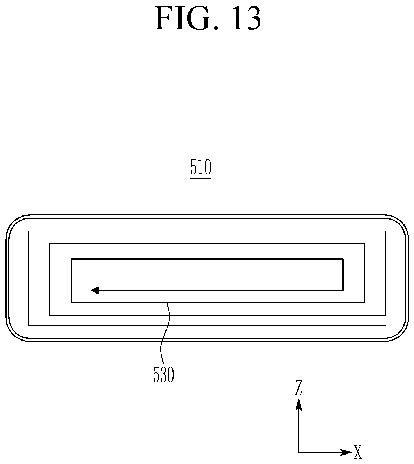

FIG. 13 is a bottom view of an electrode according to some embodiments of the present disclosure. Referring to FIG. 13, according to some embodiments of the present disclosure, a bonding part 530 of the electrode assembly 510 may be formed by repeatedly performing the process of being formed in the length direction on one surface, formed inside the thickness direction at one end of the length direction, formed again in the opposite direction to the length direction at the end of the thickness direction, and formed again inside the thickness direction at one end of the length direction.

The method for forming the bonding part 530 of the embodiments illustrated with respect to FIG. 13 may be applied to forming the bonding parts (30, 230, and 330) of the embodiments illustrated with respect to FIGS. 1-11. The embodiments illustrated with respect to FIG. 13 may relatively improve the workability of forming the bonding part 530 because there is no disconnection of the trajectory forming the bonding part 530. The quality may be uniform in the thickness direction (the z-axis direction) and the length direction (the x-axis direction) of the bonding part 530.

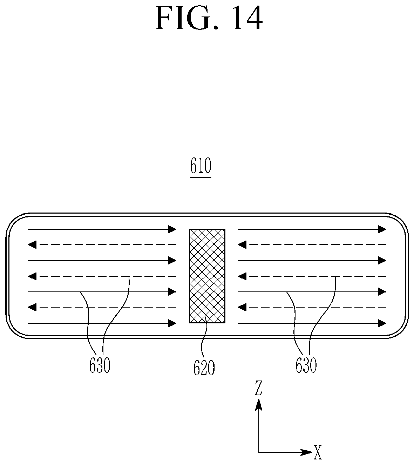

FIG. 14 is a bottom view of an electrode assembly according to some embodiments of the present disclosure. Referring to FIG. 14, according to some embodiments, a bonding part 630 of an electrode assembly 610 may be formed on both sides of one surface by skipping the central part in the length direction.

That is, the bonding part 630 may be formed by repeatedly performing the process of being formed on both sides in the length direction by skipping a central part 620 on one surface, spaced apart in the thickness direction, and again formed on both sides in the opposite length direction by skipping the central part 620 again. The method for forming the bonding part 630 as illustrated with respect to FIG. 14 may be applied to forming the bonding parts 230 and 330 of the embodiments illustrated with respect to FIGS. 8-11.

The electrode assembly 610 may open the central part 620 and form the bonding part 630 on both sides thereof, so that it may have adherence and impact-absorption properties while simultaneously relatively improving the moisture-containing performance of the electrolyte solution. Additionally, the bonding parts 430 and 530 of the embodiments illustrated with respect to FIGS. 12 and 13 may be applied to the bonding parts 630 on both sides of the embodiments illustrated and described with respect to FIG. 14.

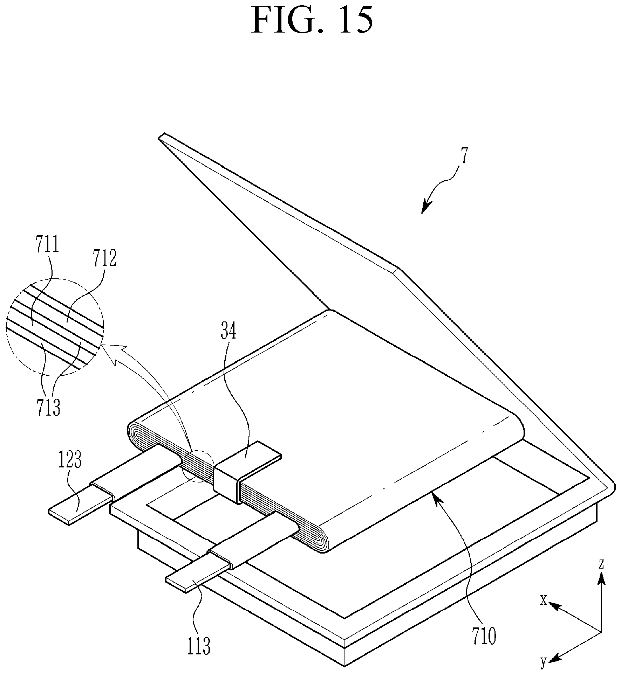

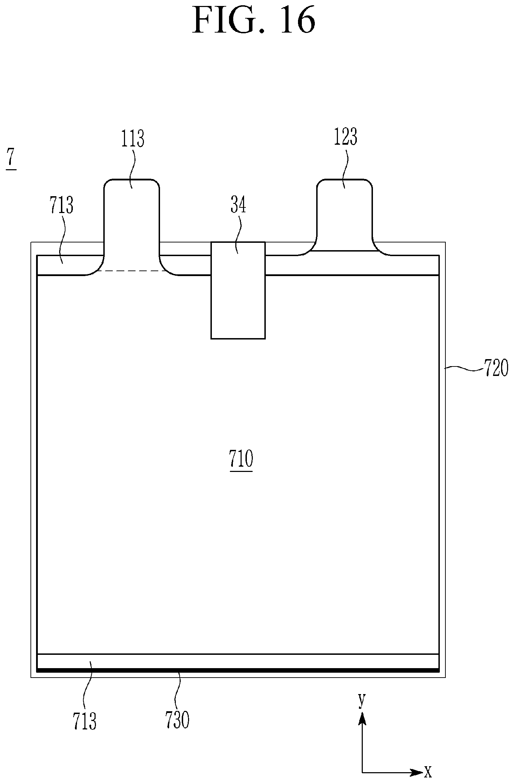

FIG. 15 is an exploded perspective view of a rechargeable battery according to some embodiments of the present disclosure. FIG. 16 is a plan view of an electrode assembly in FIG. 15. Referring to FIG. 15 and FIG. 16, in a rechargeable battery 7 according to some embodiments, an electrode assembly 710 is formed of a jelly roll type.

A bonding part 730 is formed by bonding a separator 713 protruding to the outside of a first electrode plate 711 and a second electrode plate 712 with adhesive on at least one surface facing the case 20. Since the jelly roll type electrode assembly 710 is wound, it is formed only on the first side at the bottom.

The upper end of the electrode assembly 710 is taped with an insulating tape 34. The insulating tape 34 holds the separator 713 and the first and second electrode plates 711 and 712 on the electrode tabs 113 and 123, making the bonding of the separator 713 by the bonding part 730 more stable.

The bonding part 730 is impregnated on the separator 713 on the first side of the electrode assembly 710 and attaches and secures the multi-layer separators 713 to each other, so that the first and second electrode plates 711 and 712 are fixed between the attached separators 713, thereby preventing them from protruding from the separators 713.

In addition, the bonding part 730 may absorb the impact when the rechargeable battery 7 is dropped, thereby preventing external impact from being transmitted through the case 20 to the bottom of the electrode assembly 710. The bonding part 730 may prevent the pullback of the electrode assembly 710, in which first and second electrode plates 711 and 712 are outside of the separator 713.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims and their equivalents.

**Description of Some of the Reference Symbols**

| | | | |
|---|---|---|---|
| 1, 7: | rechargeable battery | 10: | electrode assembly |
| 11: | first electrode plate | 12: | second electrode plate |
| 13: | separator | 14: | cross-sectional second electrode plate |
| 20: | case | 111: | electrode current collecting plate |
| 30: | bonding part | 31, 32: | first, second bonding impregnation layer |
| 33: | third bonding impregnation layer | 34: | insulating tape |
| 101: | first side | 102: | second side |
| 103: | third side | 112: | positive active material layer |
| 113: | electrode tab | 121: | electrode current collecting plate |
| 122: | negative active material layer | 123: | electrode tab |
| 133: | electrode tab | 141: | electrode current collecting plate |
| 142: | negative active material layer | 210: | electrode assembly |
| 230: | bonding part | 231: | first bonding impregnation layer |
| 310: | electrode assembly | 330: | bonding part |
| 331: | first bonding impregnation layer | 410: | electrode assembly |
| 430: | bonding part | 510: | electrode assembly |
| 530: | bonding part | 610: | electrode assembly |
| 630: | bonding part | 710: | electrode assembly |
| 711: | first electrode plate | 712: | second electrode plate |
| 713: | separator | | |

## Claims

1. A rechargeable battery comprising:
an electrode assembly having a repeating structure in which a first electrode plate and a second electrode plate are placed on both surfaces of a separator; and
a case that accommodates the electrode assembly,
wherein the electrode assembly includes a bonding part formed by adhesively bonding the separator that protrudes to an outside of the first electrode plate and the second electrode plate on at least one surface facing the case.

2. The rechargeable battery as claimed in claim 1, wherein:
the case is formed as a pouch or a square can, and
the electrode assembly is formed of a plate shape corresponding to an inner shape of the case.

3. The rechargeable battery as claimed in claim 1 or claim 2, wherein:
the electrode assembly has a stacked configuration.

4. The rechargeable battery as claimed in claim 1, wherein:
the electrode assembly has a jelly roll configuration.

5. The rechargeable battery as claimed in any one of claims 1 to 4, wherein:
the bonding part is formed on a first side toward a bottom of the case on the opposite side where an electrode tab is drawn out among four directions of exterior sides of the electrode assembly.

6. The rechargeable battery as claimed in claim 5, wherein:
the bonding part is formed on a second side and a third side toward the side of the case on both sides in the direction that intersects the direction in which the electrode tab is drawn out among the exterior sides of the four directions of the electrode assembly.

7. The rechargeable battery as claimed in any one of claims 1 to 6, wherein:
the bonding part is formed by applying an adhesive to an entire area of the one surface.

8. The rechargeable battery as claimed in any of claims 1 to 6, wherein:
the bonding part is formed by applying an adhesive in a plurality of dots to an entire area of the one surface.

9. The rechargeable battery as claimed in any one of claims 1 to 8, wherein:
the bonding part is formed by repeatedly performing processes of being
formed in a length direction at the one surface formed in a thickness direction and at one end of the length direction,
formed again in the length direction at the end of the thickness direction, and
formed again in the thickness direction at one end in the length direction.

10. The rechargeable battery as claimed in any one of claims 1 to 8, wherein:
the bonding part is formed by repeatedly performing processes of being
formed in the length direction on the one surface,
formed from one end of the length direction to an inside of the thickness direction,
formed again at the end of the thickness direction in the opposite direction to the length direction, and
formed again from one end of the length direction to an inside of the thickness direction.

11. The rechargeable battery as claimed in any one of claims 1 to 8, wherein:
the bonding part is formed on both sides of the one surface with a central part separated in a length direction.

12. The rechargeable battery as claimed in claim 10, wherein:
the bonding part is formed by repeatedly performing processes of being
formed on both sides of the one surface in the length direction by skipping a central part,
spaced apart in the thickness direction, and
formed on both sides in the opposite length direction by again skipping the central part.

13. The rechargeable battery as claimed in any one of claims 1 to 12, wherein:
the adhesive is a UV adhesive.

14. The rechargeable battery as claimed in any one of claims 1 to 12, wherein:
the adhesive is formed of a polyethylene-based UV adhesive.

15. The rechargeable battery as claimed in any one of claims 1 to 14, wherein:
the bonding part is formed at aligned ends of the separator.
